# EUROPÄISCHE PATENTSCHRIFT

(11) **EP 3 811 732 B1**
(45) Veröffentlichungstag und Bekanntmachung des Hinweises auf die Patenterteilung: **14.02.2024**
(21) Anmeldenummer: 19731348.9
(22) Anmeldetag: 24.05.2019
(51) Int. Cl.: H05B 6/12

(54) **INDUKTIONSGARGERÄTEVORRICHTUNG**
INDUCTION COOKING DEVICE
DISPOSITIF FORMANT APPAREIL DE CUISSON INDUCTIF

(30) Priorität: 21.06.2018 ES 201830622
(43) Veröffentlichungstag der Anmeldung: 28.04.2021
(73) Patentinhaber: BSH Hausgeräte GmbH, 81739 München (DE)
(72) Erfinder: GALINDO PEREZ, Juan Jose, 50007 Zaragoza (ES); HERNANDEZ BLASCO, Pablo Jesus, 50019 Zaragoza (ES); JACA EQUIZA, Izaskun, 50008 Zaragoza (ES); LOPE MORATILLA, Ignacio, 50010 Zaragoza (ES); MARTIN GOMEZ, Damaso, 50012 Zaragoza (ES); RIGUAL ITURRIA, Alvaro, 50012 Zaragoza (ES)
(86) Internationale Anmeldenummer: PCT/IB2019/054323
(87) Internationale Veröffentlichungsnummer: WO 2019/243923

(56) Entgegenhaltungen:
- DE-A1- 19 853 780
- DE-A1- 19 908 443
- DE-U1-202007 012 602
- US-A1- 2013 205 582
- US-A1- 2015 061 812

## Beschreibung

Die Erfindung betrifft eine Induktionsgargerätevorrichtung nach dem Oberbegriff des Anspruchs 1.

Aus ES 2 546 579 A1 ist bereits eine Induktionsgargerätevorrichtung bekannt, welche eine Induktionsheizeinheit mit einer Induktionsheizleitung aufweist. Die Induktionsheizleitung weist eine Vielzahl an Induktionsheizleitungselementen auf, die in Längsrichtung der Induktionsheizleitung azimutal und radial gewickelt sind. Jedes der Induktionsheizleitungselemente weist einen Kernmaterial auf, welches aus einem Metall ausgebildet ist und in einem Betriebszustand ein elektromagnetisches Wechselfeld bereitstellt. Neben dem Kernmaterial weist jede der Induktionsheizleitungselemente in einem Randbereich des jeweiligen Induktionsheizleitungselements ein Isolationselement auf, welches das Kernmaterial in einer Querschnittsebene, die senkrecht zu einer Längsrichtung der Induktionsheizleitung ausgerichtet ist, umgibt und welches aus Emaille besteht. Eine derartig ausgebildete Induktionsheizeinheit weist, insbesondere aufgrund der geringen Betriebstemperatur von Emaille, eine Betriebstemperatur von maximal 200 °C auf.

Die Aufgabe der Erfindung besteht insbesondere darin, eine gattungsgemäße Vorrichtung mit verbesserten Eigenschaften hinsichtlich einer Konstruktion bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einer Induktionsgargerätevorrichtung, insbesondere von einer Induktionsofenvorrichtung, mit zumindest einer Induktionsheizeinheit, welche zumindest eine Induktionsheizleitung mit einer Vielzahl an Induktionsheizleitungselementen aufweist, die in Längsrichtung der Induktionsheizleitung azimutal und radial gewickelt sind.

Es wird vorgeschlagen, dass zumindest eines der Induktionsheizleitungselemente zumindest abschnittsweise in zumindest einem Randbereich des Induktionsheizleitungselements wenigstens zu einem Großteil aus zumindest einem Randmaterial besteht, das zumindest ein Metall aufweist.

Durch die erfindungsgemäße Ausgestaltung kann insbesondere eine vorteilhafte Konstruktion erreicht werden. Aufgrund der azimutalen und radialen Wicklung der Induktionsheizleitungselemente in Längsrichtung der Induktionsheizleitung kann insbesondere eine thermische Ausdehnung der Induktionsheizleitungselemente in Längsrichtung der Induktionsheizleitungselemente wenigstens teilweise ausgeglichen werden, wodurch insbesondere eine hohe mechanische Stabilität der Induktionsheizeinheit erzielt werden kann. Insbesondere kann aufgrund einer Ausgestaltung des Randbereichs des Induktionsheizleitungselements eine geringe thermische Ausdehnung des Induktionsheizleitungselements in Längsrichtung der Induktionsheizleitung und insbesondere eine thermische Ausdehnung des Induktionsheizleitungselements in zumindest einer senkrecht zu der Längsrichtung der Induktionsheizleitung ausgerichteten Richtung ermöglicht werden, wodurch insbesondere eine geringe Wahrscheinlichkeit eines elektrischen Kurzschlusses zwischen benachbart angeordneten Induktionsheizleitungselementen erzielt werden kann. Insbesondere kann auf zumindest eine konventionelle Methode zu einer Wicklung der Induktionsheizleitung zu einer Spule und/oder zu einer, insbesondere azimutalen und radialen, Wicklung der Induktionsheizleitungselemente in Längsrichtung der Induktionsheizleitung zurückgegriffen werden, wodurch insbesondere eine einfache und/oder schnelle Montage erzielt werden kann. Es kann insbesondere eine hohe Effizienz erreicht werden, und zwar insbesondere in Bezug auf eine Beheizung zumindest eines zu beheizenden Objekts und/oder in Bezug auf Kosten und vorteilhaft in einem Vergleich zu zumindest einem Induktionsheizleitungselement, welches in einem Randbereich zumindest ein Isolationselement aufweist.

Unter einer "Induktionsgargerätevorrichtung", insbesondere unter einer "Induktionsofenvorrichtung", soll insbesondere zumindest ein Teil, insbesondere eine Unterbaugruppe, eines Induktionsgargeräts, insbesondere eines Induktionsofens, verstanden werden. Ein die Induktionsgargerätevorrichtung aufweisendes Induktionsgargerät könnte beispielsweise ein Induktionsgrill sein. Insbesondere könnte die Induktionsgargerätevorrichtung eine Induktionsgrillvorrichtung sein. Alternativ oder zusätzlich könnte ein die Induktionsgargerätevorrichtung aufweisendes Induktionsgargerät beispielsweise ein Induktionskochfeld sein. Insbesondere könnte die Induktionsgargerätevorrichtung eine Induktionskochfeldvorrichtung sein. Vorzugsweise ist ein die Induktionsgargerätevorrichtung aufweisendes Induktionsgargerät ein Induktionsofen. Insbesondere ist die Induktionsgargerätevorrichtung eine Induktionsofenvorrichtung. Unter einem "Ofen" soll insbesondere ein Gargerät verstanden werden, welches zumindest eine Muffel zu einer Garung von Lebensmitteln aufweist. Beispielsweise könnte der Ofen ein Backofen und/oder ein Herd sein.

Die Induktionsgargerätevorrichtung weist insbesondere zumindest eine Muffel auf, welche insbesondere zumindest einen Garraum wenigstens teilweise definiert und/oder begrenzt. Insbesondere weist die Induktionsgargerätevorrichtung zumindest eine Gerätetür auf, welche in wenigstens einem Betriebszustand insbesondere gemeinsam mit der Muffel den Garraum wenigstens im Wesentlichen und vorteilhaft vollständig definiert und/oder begrenzt. In wenigstens einem montierten Zustand ist insbesondere die Induktionsheizleitung an der Muffel, insbesondere an zumindest einer Muffelwandung der Muffel, angeordnet. Beispielsweise könnte die Induktionsheizleitung in wenigstens einem Betriebszustand an zumindest einer Muffelseitenwand der Muffel und/oder an zumindest einer Muffelrückwand der Muffel angeordnet sein. Insbesondere ist die Induktionsheizleitung in wenigstens einem Betriebszustand an zumindest einer Muffeldeckenwand der Muffel und/oder an zumindest einer Muffelbodenwand der Muffel angeordnet. Die Induktionsheizleitung erstreckt sich in wenigstens einem Betriebszustand insbesondere wenigstens zu einem Großteil über zumindest eine Muffelwandung der Muffel und/oder Muffelseite der Muffel. Beispielsweise könnte die Induktionsheizleitung in wenigstens einem Betriebszustand innerhalb des Garraums angeordnet sein. Besonders vorteilhaft ist die Induktionsheizleitung in wenigstens einem Betriebszustand außerhalb des Garraums angeordnet.

Durch eine Anordnung der Induktionsheizleitung an der Muffel, insbesondere an zumindest einer Muffelwandung der Muffel, kann insbesondere eine effiziente Ausgestaltung erzielt werden, da besonders vorteilhaft elektrische Verluste der Induktionsheizleitung zu einer Erhitzung, welche insbesondere zusätzlich zu einer induktiven Erhitzung der Muffel, insbesondere der Muffelwandung, erfolgt, benutzt werden.

Unter einer "Induktionsheizeinheit" soll in diesem Zusammenhang insbesondere eine Einheit verstanden werden, welche dazu vorgesehen ist, in wenigstens einem Betriebszustand zumindest einem zu beheizenden Objekt Energie, insbesondere in Form eines elektromagnetischen Wechselfelds, zum Zweck einer Beheizung des zu beheizenden Objekts zuzuführen, wobei die dem beheizenden Objekt zugeführte Energie insbesondere in dem beheizenden Objekt in Wärme umgewandelt werden könnte. Insbesondere ist die Induktionsheizleitung der Induktionsheizeinheit zu zumindest einer Spule gewickelt. Die Induktionsheizeinheit könnte beispielsweise zumindest zwei, insbesondere zumindest drei, vorteilhaft zumindest vier, besonders vorteilhaft zumindest fünf, vorzugsweise zumindest sechs und besonders bevorzugt mehrere Induktionsheizleitungen aufweisen.

Beispielsweise könnte die Induktionsgargerätevorrichtung das zu beheizende Objekt aufweisen. Zumindest ein zu beheizendes Objekt könnte beispielsweise eine Wandung sein, wie beispielsweise eine Muffelwandung, und insbesondere einen Garraum wenigstens teilweise begrenzen. Alternativ oder zusätzlich könnte zumindest ein zu beheizendes Objekt insbesondere ein Gargeschirr sein.

Unter einer "Induktionsheizleitung" soll insbesondere ein Objekt verstanden werden, welches in wenigstens einem Betriebszustand elektrischen Strom führt und welches insbesondere dazu vorgesehen ist, mittels des elektrischen Stroms eine von der Induktionsheizleitung bereitgestellten Energie wenigstens zu einem Großteil bereitzustellen. Insbesondere überträgt die Induktionsheizleitung in wenigstens einem Betriebszustand mittels der Induktionsheizleitungselemente, insbesondere mittels eines durch die Induktionsheizleitungselemente fließenden elektrischen Stroms, Energie, insbesondere elektromagnetische Energie, an zumindest ein zu beheizendes Objekt, und zwar insbesondere zum Zweck einer induktiven Beheizung des zu beheizenden Objekts.

Die Induktionsheizleitung könnte in zumindest einer Querschnittsebene, welche insbesondere wenigstens im Wesentlichen senkrecht zu einer Längsrichtung der Induktionsheizleitung ausgerichtet sein könnte, beispielsweise eine rechteckförmige Gestalt aufweisen. Vorteilhaft weist die Induktionsheizleitung in zumindest einer Querschnittsebene, welche insbesondere wenigstens im Wesentlichen senkrecht zu einer Längsrichtung der Induktionsheizleitung ausgerichtet ist, eine ovalförmige und vorteilhaft kreisförmige Gestalt auf.

Zumindest ein Induktionsheizleitungselement der Vielzahl an Induktionsheizleitungselementen könnte in zumindest einer Querschnittsebene, welche insbesondere wenigstens im Wesentlichen senkrecht zu einer Längsrichtung der Induktionsheizleitung ausgerichtet sein könnte, beispielsweise eine rechteckförmige Gestalt aufweisen. Vorteilhaft weist zumindest ein Induktionsheizleitungselement der Vielzahl an Induktionsheizleitungselementen in zumindest einer Querschnittsebene, welche insbesondere wenigstens im Wesentlichen senkrecht zu einer Längsrichtung der Induktionsheizleitung ausgerichtet ist, eine ovalförmige und vorteilhaft kreisförmige Gestalt auf. Besonders vorteilhaft sind zumindest ein Großteil der und vorteilhaft alle der Induktionsheizleitungselemente identisch ausgebildet, weshalb hier und im gesamten folgenden Text eine Eigenschaft, welche für eines der Induktionsheizleitungselemente der Vielzahl an Induktionsheizleitungselementen beschrieben wird, gleichfalls auch für zumindest einen Großteil und vorteilhaft alle weiteren Induktionsheizleitungselemente der Vielzahl an Induktionsheizleitungselementen gilt.

Unter einer "Längsrichtung" der Induktionsheizleitung soll insbesondere eine Richtung verstanden werden, die bei einer geraden Abwicklung der Induktionsheizleitung parallel zu einer längsten Seite eines gedachten kleinsten geometrischen Quaders ausgerichtet ist, der die Induktionsheizleitung gerade noch umschließt.

Unter der Wendung, dass die Vielzahl an Induktionsheizleitungselementen in Längsrichtung der Induktionsheizleitung "azimutal" gewickelt ist, soll insbesondere verstanden werden, dass jedes Induktionsheizleitungselement der Vielzahl an Induktionsheizleitungselementen bei Betrachtung sämtlicher Querschnittsebenen innerhalb eines Längenabschnitts der Induktionsheizleitung jede Winkelposition genau einmal einnimmt und damit vorteilhaft einen Winkelbereich von 360° durchläuft, wobei insbesondere zwei in einer der Querschnittsebenen direkt benachbart angeordnete Induktionsheizleitungselemente in jeder der Querschnittsebenen direkt benachbart angeordnet sind und damit insbesondere Überschneidungen der Induktionsheizleitungselemente ausgeschlossen sind. Besonders vorteilhaft weist die Induktionsheizleitung eine Vielzahl an Längenabschnitten auf, welche insbesondere wenigstens im Wesentlichen identisch zueinander ausgebildet sind und in der Längsrichtung der Induktionsheizleitung insbesondere direkt aneinander anschließen und welche insbesondere gemeinsam eine Längserstreckung der Induktionsheizleitung ausbilden.

Unter der Wendung, dass die Vielzahl an Induktionsheizleitungselementen in Längsrichtung der Induktionsheizleitung "radial" gewickelt ist, soll insbesondere verstanden werden, dass jedes Induktionsheizleitungselement der Vielzahl an Induktionsheizleitungselementen bei Betrachtung sämtlicher Querschnittsebenen innerhalb eines Längenabschnitts der Induktionsheizleitung, und insbesondere bei einer senkrechten Projektion des Längenabschnitts auf eine Projektionsebene, die parallel zu der Längsrichtung der Induktionsheizleitung ausgerichtet ist, jeden Radialabstand relativ zu einer ersten Position, den das Induktionsheizleitungselement in einer ersten Querschnittsebene annimmt, zumindest einmal und vorteilhaft zweimal, insbesondere mit Ausnahme von Positionen, welche mit seitlichen Begrenzungen in der Querschnittsebene überlappen, einnimmt, wobei insbesondere zwei in einer der Querschnittsebenen direkt benachbart angeordnete Induktionsheizleitungselemente in jeder der Querschnittsebenen direkt benachbart angeordnet sind und damit insbesondere Überschneidungen der Induktionsheizleitungselemente ausgeschlossen sind. Besonders vorteilhaft weist die Induktionsheizleitung eine Vielzahl an Längenabschnitten auf, welche insbesondere wenigstens im Wesentlichen identisch zueinander ausgebildet sind und in der Längsrichtung der Induktionsheizleitung insbesondere direkt aneinander anschließen und welche insbesondere gemeinsam eine Längserstreckung der Induktionsheizleitung ausbilden.

Nimmt ein Induktionsheizleitungselement beispielsweise in der ersten Querschnittsebene eine Position ein, die mit einer seitlichen Begrenzung der Induktionsheizleitung in der ersten Querschnittsebene überlappt, definiert das Induktionsheizleitungselement bei einer senkrechten Projektion des Längenabschnitts auf eine Projektionsebene, die parallel zu der Längsrichtung der Induktionsheizleitung ausgerichtet ist, gemeinsam mit der seitlichen Begrenzung in der Projektionsebene ein wenigstens im Wesentlichen gleichschenkliges Dreieck.

Insbesondere verändern sich bei Betrachtung sämtlicher Querschnittsebenen innerhalb eines Längenabschnitts der Induktionsheizleitung sowohl ein Abstand der Induktionsheizleitungselemente relativ zu einer bestimmten Position, wie beispielsweise zu einem geometrischen Mittelpunkt und/oder Schwerpunkt, als auch eine Winkelorientierung relativ zu der bestimmten Position in Längsrichtung der Induktionsheizleitung, und zwar insbesondere für jedes der Induktionsheizleitungselemente der Vielzahl an Induktionsheizleitungselementen.

Unter der Wendung, dass zumindest eines der Induktionsheizleitungselemente "zumindest abschnittsweise" aus zumindest einem Randmaterial besteht, soll insbesondere verstanden werden, dass das Induktionsheizleitungselement über einen Anteil von mindestens 10 %, insbesondere von mindestens 30 %, vorteilhaft von mindestens 50 %, besonders vorteilhaft von mindestens 70 %, vorzugsweise von mindestens 80 % und besonders bevorzugt von mindestens 90 % einer Längserstreckung der Induktionsheizleitung aus dem Randmaterial besteht. Unter einer "Längserstreckung" eines Objekts soll insbesondere eine Erstreckung in Längsrichtung des Objekts verstanden werden. Unter einer "Erstreckung" eines Objekts soll insbesondere ein maximaler Abstand zweier Punkte einer senkrechten Projektion des Objekts auf eine Ebene verstanden werden.

Unter einem "Randmaterial" eines Objekts soll insbesondere eine chemische Verbindung verstanden werden, welche zumindest zwei gleichartige chemische Elemente und/oder zumindest zwei verschiedenartige chemische Elemente aufweist und insbesondere wenigstens zu einem Großteil und vorteilhaft vollständig aus diesen Elementen besteht. Unter einem "Randbereich" eines Objekts soll insbesondere ein Bereich verstanden werden, welcher sich in einer Querschnittsebene des Objekts, welche insbesondere senkrecht zu einer Längsrichtung des Objekts ausgerichtet ist, ausgehend von einer seitlichen Berandung des Objekts in der Querschnittsebene in zumindest einer Radialrichtung, welche in Richtung zumindest eines geometrischen Mittelpunkts und/oder Schwerpunkts des Objekts in der Querschnittsebene ausgerichtet ist, erstreckt und welcher insbesondere von der seitlichen Berandung des Objekts in der Radialrichtung einen minimalen Abstand von maximal 25 %, insbesondere von maximal 20 %, vorteilhaft von maximal 15 %, besonders vorteilhaft von maximal 12 %, vorzugsweise von maximal 10 % und besonders bevorzugt von maximal 5 % einer maximalen Erstreckung des Objekts parallel zu der Radialrichtung aufweist.

Unter "wenigstens zu einem Großteil" soll insbesondere zu einem Anteil, insbesondere einem Massenanteil und/oder einem Volumenanteil und/oder einem Stoffmengenanteil und/oder einem Anteil zumindest eines chemischen Elements, von mindestens 50 %, insbesondere von mindestens 60 %, vorteilhaft von mindestens 70 %, besonders vorteilhaft von mindestens 80 %, vorzugsweise von mindestens 90 % und besonders bevorzugt von mindestens 95 % verstanden werden.

Unter der Wendung, dass ein Randmaterial zumindest ein Metall "aufweist", soll in diesem Zusammenhang insbesondere verstanden werden, dass das Randmaterial zu einem Anteil, insbesondere zu einem Massenanteil und/oder Volumenanteil und/oder Stoffmengenanteil, von mindestens 10 %, insbesondere von mindestens 15 %, vorteilhaft von mindestens 20 %, besonders vorteilhaft von mindestens 25 %, vorzugsweise von mindestens 30 % und besonders bevorzugt von mindestens 35 % aus dem Metall besteht. Beispielsweise könnte das Randmaterial aus genau einem Material bestehen und insbesondere eine Vielzahl identischer chemischer Elemente aufweisen. Das Randmaterial könnte beispielsweise ausschließlich aus einem Metall bestehen. Alternativ könnte das Randmaterial beispielsweise aus zumindest zwei, insbesondere aus zumindest drei, vorteilhaft aus zumindest vier und vorzugsweise aus zumindest fünf Materialien bestehen und insbesondere eine Metallverbindung aufweisen.

Unter einer "Metallverbindung" soll insbesondere eine chemische Verbindung verstanden werden, welche durch zumindest zwei Materialien, von welchen zumindest ein Material ein Metall ist, gebildet ist und welche insbesondere zu einem Anteil, insbesondere zu einem Massenanteil und/oder Volumenanteil und/oder Stoffmengenanteil, von mindestens 10 %, insbesondere von mindestens 15 %, vorteilhaft von mindestens 20 %, besonders vorteilhaft von mindestens 25 %, vorzugsweise von mindestens 30 % und besonders bevorzugt von mindestens 35 % aus dem Metall besteht und welche insbesondere zu einem Anteil, insbesondere zu einem Massenanteil und/oder Volumenanteil und/oder Stoffmengenanteil, von maximal 95 %, insbesondere von maximal 90 %, vorteilhaft von maximal 85 %, besonders vorteilhaft von maximal 80 %, vorzugsweise von maximal 75 % und besonders bevorzugt von maximal 70 % aus dem Metall besteht.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einem weiteren Aspekt der Erfindung, welcher für sich alleine genommen oder gemeinsam mit anderen Aspekten der Erfindung betrachtet werden kann, wird vorgeschlagen, dass die Induktionsheizeinheit eine maximale Betriebstemperatur von mindestens 250 °C, insbesondere von mindestens 300 °C, vorteilhaft von mindestens 350 °C, besonders vorteilhaft von mindestens 400 °C, vorzugsweise von mindestens 450 °C und besonders bevorzugt von mindestens 500 °C aufweist. Unter einer "maximalen Betriebstemperatur" eines Objekts soll insbesondere eine Temperatur verstanden werden, bis zu welcher sich das Objekt in einem funktionsfähigen Zustand befindet. Insbesondere handelt es sich bei der maximalen Betriebstemperatur eines Objekts um eine intrinsische Eigenschaft des Objekts, und zwar insbesondere um eine Materialeigenschaft des Objekts. Vorteilhaft ist die maximale Betriebstemperatur eines Objekts durch zumindest eine Schmelztemperatur des Objekts definiert und/oder festgelegt. Dadurch kann insbesondere selbst bei hohen Temperaturen eine optimale Beheizung und/oder eine langlebige Ausgestaltung ermöglicht werden, wodurch insbesondere eine hohe Zufriedenheit bei einem Bediener erreicht werden kann.

Beispielsweise könnte eine Anzahl von mindestens 10 %, insbesondere von mindestens 20 %, vorteilhaft von mindestens 30 %, besonders vorteilhaft von mindestens 40 %, vorzugsweise von mindestens 50 % und besonders bevorzugt von mindestens 60 % der Induktionsheizleitungselemente zumindest abschnittsweise in zumindest einem jeweiligen Randbereich wenigstens zu einem Großteil aus dem Randmaterial bestehen. Vorzugsweise besteht wenigstens ein Großteil der Induktionsheizleitungselemente zumindest abschnittsweise in zumindest einem jeweiligen Randbereich wenigstens zu einem Großteil aus dem Randmaterial. Unter der Wendung "wenigstens ein Großteil" der Induktionsheizleitungselemente soll insbesondere eine Anzahl von mindestens 70 %, insbesondere von mindestens 75 %, vorteilhaft von mindestens 80 %, besonders vorteilhaft von mindestens 85 %, vorzugsweise von mindestens 90 % und besonders bevorzugt von mindestens 95 % der Induktionsheizleitungselemente verstanden werden. Dadurch kann insbesondere eine geringe Lagerhaltung und/oder eine geringe Bauteilevielfalt erzielt werden, wodurch insbesondere geringe Kosten und/oder eine einfache Herstellung ermöglicht werden kann.

Das Induktionsheizleitungselement könnte beispielsweise über eine Erstreckung von mindestens 10 %, insbesondere von mindestens 20 %, vorteilhaft von mindestens 30 %, besonders vorteilhaft von mindestens 40 %, vorzugsweise von mindestens 50 % und besonders bevorzugt von mindestens 60 % einer gesamten Längserstreckung der Induktionsheizleitung in dem Randbereich wenigstens zu einem Großteil aus dem Randmaterial bestehen. Vorzugsweise besteht das Induktionsheizleitungselement über wenigstens im Wesentlichen eine gesamte Längserstreckung der Induktionsheizleitung in dem Randbereich wenigstens zu einem Großteil aus dem Randmaterial. Vorteilhaft besteht wenigstens ein Großteil der Induktionsheizleitungselemente über wenigstens im Wesentlichen eine gesamte Längserstreckung der Induktionsheizleitung in zumindest einem jeweiligen Randbereich wenigstens zu einem Großteil aus dem Randmaterial. Unter der Wendung, dass das Induktionsheizleitungselement über "wenigstens im Wesentlichen" eine gesamte Längserstreckung der Induktionsheizleitung in dem Randbereich wenigstens zu einem Großteil aus dem Randmaterial besteht, soll insbesondere verstanden werden, dass das Induktionsheizleitungselement über eine Erstreckung von mindestens 70 %, insbesondere von mindestens 75 %, vorteilhaft von mindestens 80 %, besonders vorteilhaft von mindestens 85 %, vorzugsweise von mindestens 90 % und besonders bevorzugt von mindestens 95 % einer gesamten Längserstreckung der Induktionsheizleitung in dem Randbereich wenigstens zu einem Großteil aus dem Randmaterial besteht. Dadurch kann das Induktionsheizleitungselement insbesondere in besonders einfacher und/oder kostengünstiger Weise hergestellt werden.

Ferner wird vorgeschlagen, dass das Randmaterial wenigstens zu einem Großteil und insbesondere ausschließlich zumindest ein Metall und/oder zumindest eine Metalllegierung aufweist. Insbesondere besteht das Randmaterial wenigstens zu einem Großteil aus dem Metall und/oder der Metalllegierung. Insbesondere ist das Randmaterial frei von Nichtmetallen. Das Randmaterial ist insbesondere elektrisch leitfähig und vorteilhaft von einem elektrischen Isolator verschieden ausgebildet. Unter einer "Metalllegierung" soll insbesondere eine chemische Verbindung verstanden werden, welche durch zumindest zwei Metalle gebildet ist und welche insbesondere wenigstens zu einem Großteil aus den Metallen besteht. Dadurch kann insbesondere ein qualitativ hochwertiges Randmaterial bereitgestellt und/oder auf ein Isolationsmaterial verzichtet werden, wodurch insbesondere ein hoher Komfort für einen Bediener ermöglicht werden kann.

Beispielsweise könnten das Randmaterial und ein Kernmaterial des Induktionsheizleitungselements voneinander verschiedene Materialien und insbesondere Metalle sein. Beispielsweise könnten das Randmaterial wenigstens zu einem Großteil und insbesondere ausschließlich aus Aluminium und das Kernmaterial wenigstens zu einem Großteil und insbesondere ausschließlich aus Kupfer bestehen. Alternativ könnten beispielsweise das Randmaterial wenigstens zu einem Großteil und insbesondere ausschließlich aus Kupfer und das Kernmaterial wenigstens zu einem Großteil und insbesondere ausschließlich aus Aluminium bestehen. Vorzugsweise sind das Randmaterial und ein Kernmaterial des Induktionsheizleitungselements identisch. Beispielsweise könnten das Randmaterial und das Kernmaterial wenigstens zu einem Großteil und insbesondere ausschließlich aus Kupfer und/oder aus Aluminium bestehen. Insbesondere sind ein jeweiliges Randmaterial und ein jeweiliges Kernmaterial eines jeweiligen Induktionsheizleitungselements identisch. Unter einem "Kernmaterial" eines Objekts soll insbesondere eine chemische Verbindung verstanden werden, welche zumindest zwei gleichartige chemische Elemente und/oder zumindest zwei verschiedenartige chemische Elemente aufweist und insbesondere wenigstens zu einem Großteil und vorteilhaft vollständig aus diesen Elementen besteht. Unter einem Kernbereich" eines Objekts soll insbesondere ein Bereich verstanden werden, welcher sich in einer Querschnittsebene des Objekts, welche insbesondere senkrecht zu einer Längsrichtung des Objekts ausgerichtet ist, ausgehend von einem geometrischen Mittelpunkt und/oder Schwerpunkt des Objekts in der Querschnittsebene in zumindest einer Radialrichtung, welche in Richtung einer seitlichen Berandung des Objekts in der Querschnittsebene ausgerichtet ist, erstreckt und welcher insbesondere von dem geometrischen Mittelpunkt und/oder Schwerpunkt des Objekts in der Radialrichtung einen minimalen Abstand von maximal 25 %, insbesondere von maximal 20 %, vorteilhaft von maximal 15 %, besonders vorteilhaft von maximal 12 %, vorzugsweise von maximal 10 % und besonders bevorzugt von maximal 5 % einer maximalen Erstreckung des Objekts parallel zu der Radialrichtung aufweist. Dadurch kann das Induktionsheizleitungselement insbesondere in besonders einfacher und/oder kostengünstiger Weise hergestellt werden.

Weiterhin wird vorgeschlagen, dass das Randmaterial wenigstens zu einem Großteil und insbesondere ausschließlich zumindest eine Metallverbindung aufweist und insbesondere wenigstens zu einem Großteil aus der Metallverbindung besteht. Insbesondere ist das Randmaterial von einem Reinmaterial verschieden ausgebildet. Dadurch kann insbesondere eine hohe Flexibilität ermöglicht werden, und zwar insbesondere aufgrund einer Vielzahl an zur Verfügung stehenden Materialverbindungen.

Beispielsweise könnten das Randmaterial und ein Kernmaterial des Induktionsheizleitungselements aus verschiedenen Materialien bestehen und insbesondere frei von zumindest einem gemeinsamen Material sein. Vorzugsweise weist das Induktionsheizleitungselement zumindest ein Kernmaterial auf, welches wenigstens zu einem Großteil aus zumindest einem Metall besteht, das Teil des eine Metallverbindung aufweisenden Randmaterials ist, aus dem das Induktionsheizleitungselement insbesondere in dem Randbereich wenigstens zu einem Großteil besteht. Beispielsweise könnten das Randmaterial wenigstens zu einem Großteil und insbesondere ausschließlich aus zumindest einer Aluminiumverbindung und das Kernmaterial wenigstens zu einem Großteil und insbesondere ausschließlich aus Aluminium bestehen. Alternativ könnten beispielsweise das Randmaterial wenigstens zu einem Großteil und insbesondere ausschließlich aus zumindest einer Kupferverbindung und das Kernmaterial wenigstens zu einem Großteil und insbesondere ausschließlich aus Kupfer bestehen. Besonders vorteilhaft könnte das die Metallverbindung aufweisende Randmaterial ein Oxid des Kernmaterials sein und insbesondere durch Oxidation des Kernmaterials hergestellt sein. Dadurch kann insbesondere eine besonders vorteilhafte Konstruktion bereitgestellt werden.

Zudem wird vorgeschlagen, dass das die Metallverbindung aufweisende Randmaterial elektrisch isolierend ist und insbesondere zumindest ein Metalloxid aufweist. Insbesondere ist die Metallverbindung ein Metalloxid. Unter einem "elektrisch isolierenden" Objekt soll insbesondere ein Objekt verstanden werden, welches eine elektrische Leitfähigkeit von maximal 10⁻³ S/m, insbesondere von maximal 10⁻⁴ S/m, vorteilhaft von maximal 10⁻⁵ S/m, besonders vorteilhaft von maximal 10⁻⁶ S/m, vorzugsweise von maximal 10⁻⁷ S/m und besonders bevorzugt von maximal 10⁻⁸ S/m aufweist. Dadurch kann insbesondere ein Kurzschluss zwischen benachbart angeordneten Induktionsheizleitungselementen vermieden werden, wodurch insbesondere eine funktionstüchtige und/oder sichere und/oder langlebige Ausgestaltung erzielt werden kann.

Ein Kernmaterial des Induktionsheizleitungselements könnte beispielsweise zu einem Großteil aus Aluminium bestehen. Vorzugsweise besteht ein Kernmaterial des Induktionsheizleitungselements und insbesondere ein jeweiliges Kernmaterial eines jeweiligen Induktionsheizleitungselements wenigstens zu einem Großteil aus Aluminium. Dadurch kann insbesondere eine besonders vorteilhafte Ausgestaltung erzielt werden.

Ferner wird vorgeschlagen, dass das Induktionsheizleitungselement und insbesondere zumindest ein Großteil der Induktionsheizleitungselemente in zumindest einer Querschnittsebene, welche insbesondere wenigstens im Wesentlichen senkrecht zu einer Längsrichtung der Induktionsheizleitung ausgerichtet ist, eine insbesondere jeweilige maximale Erstreckung, insbesondere einen Durchmesser, von maximal 1 mm, insbesondere von maximal 0,9 mm, vorteilhaft von maximal 0,8 mm, besonders vorteilhaft von maximal 0,7 mm, vorzugsweise von maximal 0,6 mm und besonders bevorzugt von maximal 0,5 mm aufweist. Insbesondere weist das Induktionsheizleitungselement und insbesondere zumindest ein Großteil der Induktionsheizleitungselemente in zumindest einer Querschnittsebene, welche insbesondere wenigstens im Wesentlichen senkrecht zu einer Längsrichtung der Induktionsheizleitung ausgerichtet ist, eine insbesondere jeweilige maximale Erstreckung, insbesondere einen Durchmesser, von mindestens 0,1 mm, insbesondere von mindestens 0,15 mm, vorteilhaft von mindestens 0,2 mm, besonders vorteilhaft von mindestens 0,25 mm, vorzugsweise von mindestens 0,3 mm und besonders bevorzugt von mindestens 0,4 mm auf. Dadurch kann insbesondere eine kompakte Ausgestaltung erreicht werden.

Zudem wird vorgeschlagen, dass die Induktionsheizleitung in zumindest einer Querschnittsebene, welche insbesondere wenigstens im Wesentlichen senkrecht zu einer Längsrichtung der Induktionsheizleitung ausgerichtet ist, eine maximale Erstreckung, insbesondere einen Durchmesser, von maximal 10 mm, insbesondere von maximal 9 mm, vorteilhaft von maximal 8 mm, besonders vorteilhaft von maximal 7 mm, vorzugsweise von maximal 6 mm und besonders bevorzugt von maximal 5 mm aufweist. Insbesondere weist die Induktionsheizleitung in zumindest einer Querschnittsebene, welche insbesondere wenigstens im Wesentlichen senkrecht zu einer Längsrichtung der Induktionsheizleitung ausgerichtet ist, eine maximale Erstreckung, insbesondere einen Durchmesser, von mindestens 1 mm, insbesondere von mindestens 1,5 mm, vorteilhaft von mindestens 2 mm, besonders vorteilhaft von mindestens 2,5 mm, vorzugsweise von mindestens 3 mm und besonders bevorzugt von mindestens 3,5 mm auf. Dadurch kann insbesondere eine kompakte Ausgestaltung erreicht werden.

Ferner wird vorgeschlagen, dass eine Anzahl an Induktionsheizleitungselementen mindestens 15, insbesondere mindestens 20, vorteilhaft mindestens 30, besonders vorteilhaft mindestens 40, vorzugsweise mindestens 50 und besonders bevorzugt mindestens 60 beträgt. Insbesondere beträgt eine Anzahl an Induktionsheizleitungselementen maximal 500, insbesondere maximal 400, vorteilhaft maximal 300, besonders vorteilhaft maximal 200, vorzugsweise maximal 180 und besonders bevorzugt maximal 150. Eine Anzahl an Induktionsheizleitungselementen ist insbesondere abhängig von einem Durchmesser der Induktionsheizleitungselemente. Insbesondere ist eine Anzahl an Induktionsheizleitungselementen geringer bei größerem Durchmesser der Induktionsheizleitungselemente und insbesondere größer bei kleinerem Durchmesser der Induktionsheizleitungselemente. Bei einem Durchmesser von 0,45 mm der Induktionsheizleitungselemente könnte eine Anzahl an Induktionsheizleitungselementen wenigstens im Wesentlichen 27 betragen. Bei einem Durchmesser von 0,3 mm der Induktionsheizleitungselemente könnte eine Anzahl an Induktionsheizleitungselementen wenigstens im Wesentlichen 61 betragen. Unter "wenigstens im Wesentlichen" soll in diesem Zusammenhang insbesondere verstanden werden, dass eine Abweichung von einem vorgegebenen Wert insbesondere maximal 25 %, vorzugsweise maximal 10 % und besonders bevorzugt maximal 5 % des vorgegebenen Werts abweicht. Dadurch kann insbesondere eine optimale Anzahl an Induktionsheizleitungselementen ausgewählt werden, wodurch insbesondere vorteilhafte Beheizungseigenschaften erzielt werden können.

Eine besonders vorteilhafte Konstruktion kann insbesondere erreicht werden durch ein Induktionsgargerät, insbesondere Induktionsofen, mit zumindest einer erfindungsgemäßen Induktionsgargerätevorrichtung.

Eine besonders vorteilhafte Induktionsgargerätevorrichtung, welche sich insbesondere durch eine vorteilhafte Konstruktion und/oder durch optimierte Beheizungseigenschaften und/oder durch optimierte elektrische Eigenschaften auszeichnet, kann insbesondere hergestellt werden durch ein Verfahren zu einer Herstellung einer erfindungsgemäßen Induktionsgargerätevorrichtung, insbesondere einer erfindungsgemäßen Induktionsofenvorrichtung, die zumindest eine Induktionsheizeinheit aufweist, welche zumindest eine Induktionsheizleitung mit einer Vielzahl an Induktionsheizleitungselementen aufweist, die in Längsrichtung der Induktionsheizleitung azimutal und radial gewickelt werden, wobei zumindest eines der Induktionsheizleitungselemente zumindest abschnittsweise in zumindest einem Randbereich wenigstens zu einem Großteil aus zumindest einem Randmaterial ausgebildet wird, das zumindest ein Metall aufweist.

Die Induktionsgargerätevorrichtung soll hierbei nicht auf die oben beschriebene Anwendung und Ausführungsform beschränkt sein. Insbesondere kann die Induktionsgargerätevorrichtung zu einer Erfüllung einer hierin beschriebenen Funktionsweise eine von einer hierin genannten Anzahl von einzelnen Elementen, Bauteilen und Einheiten abweichende Anzahl aufweisen.

Es zeigen:
- Fig. 1: ein Induktionsgargerät mit einer Induktionsgargerätevorrichtung in einer schematischen Darstellung,
- Fig. 2: einen Ausschnitt des Induktionsgargeräts in einer schematischen Schnittdarstellung,
- Fig. 3: einen Längenabschnitt einer Induktionsheizleitung einer Induktionsheizenheit der Induktionsgargerätevorrichtung in einer schematischen Darstellung,
- Fig. 4: ein Induktionsheizleitungselement der Induktionsheizleitung in einer schematischen Schnittdarstellung und
- Fig. 5: ein Induktionsheizleitungselement einer Induktionsheizleitung einer Induktionsheizeinheit einer alternativen Induktionsgargerätevorrichtung in einer schematischen Schnittdarstellunk.

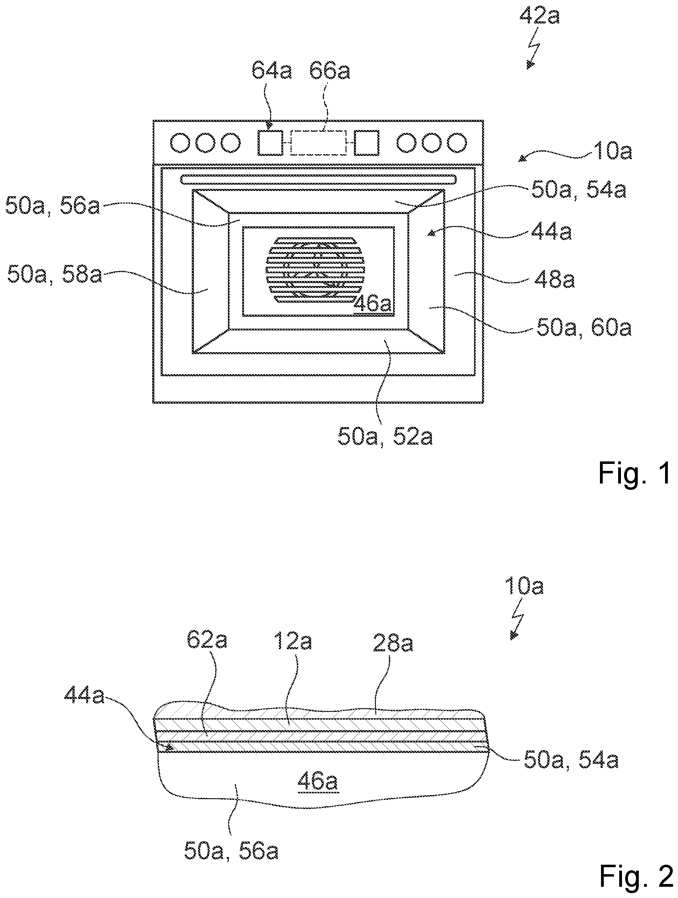

Figur 1 zeigt ein Induktionsgargerät 42a. Beispielsweise könnte das Induktionsgargerät 42a als ein Induktionskochfeld und/oder als ein Induktionsgrillgerät ausgebildet sein. Im vorliegenden Ausführungsbeispiel ist das Induktionsgargerät 42a als ein Induktionsofen ausgebildet. Beispielsweise könnte das Induktionsgargerät 42a als ein Induktionsbackofen und/oder als ein Induktionsherd ausgebildet sein.

Das Induktionsgargerät 42a weist eine Induktionsgargerätevorrichtung 10a auf. Die Induktionsgargerätevorrichtung 10a ist als eine Induktionsofenvorrichtung ausgebildet.

Beispielsweise könnte die Induktionsgargerätevorrichtung 10a als eine Induktionsbackofenvorrichtung und/oder als eine Induktionsherdvorrichtung ausgebildet sein.

Die Induktionsgargerätevorrichtung 10a weist eine Muffel 44a auf. Die Muffel 44a begrenzt einen Garraum 46a teilweise. Die Muffel 44a begrenzt den Garraum 46a gemeinsam mit einer Gargerätetür 48a im Wesentlichen. Die Induktionsgargerätevorrichtung 10a weist die Gargerätetür 48a auf.

Die Induktionsgargerätevorrichtung 10a weist im vorliegenden Ausführungsbeispiel fünf Muffelwandungen 50a auf. Von mehrfach vorhandenen Objekten ist in den Figuren jeweils lediglich eines mit einem Bezugszeichen versehen. Die Muffelwandungen 50a sind Teil der Muffel 44a. Die Muffelwandungen 50a definieren gemeinsam mit der Gargerätetür 48a den Garraum 46a im Wesentlichen.

Eine der Muffelwandungen 50a ist als eine Muffelbodenwand 52a ausgebildet. Eine der Muffelwandungen 50a ist als eine Muffeldeckenwand 54a ausgebildet. Eine der Muffelwandungen 50a ist als eine Muffelrückwand 56a ausgebildet. Zwei der Muffelwandungen 50a sind als eine Muffelseitenwand 58a, 60a ausgebildet. Im Folgenden wird lediglich eine der Muffelwandungen 50a beschrieben.

Die Induktionsgargerätevorrichtung 10a weist eine Bedienerschnittstelle 64a zu einer Eingabe und/oder Auswahl von Betriebsparametern auf (vgl. Fig. 1), beispielsweise einer Heizleistung und/oder einer Heizleistungsdichte und/oder einer Heizzone. Die Bedienerschnittstelle 64a ist zu einer Ausgabe eines Werts eines Betriebsparameters an einen Bediener vorgesehen.

Die Induktionsgargerätevorrichtung 10a weist eine Steuereinheit 66a auf. Die Steuereinheit 66a ist dazu vorgesehen, in Abhängigkeit von mittels der Bedienerschnittstelle 64a eingegebenen Betriebsparametern Aktionen auszuführen und/oder Einstellungen zu verändern. Die Steuereinheit 66a regelt in einem Betriebszustand eine Energiezufuhr zu zumindest einer Induktionsheizeinheit 12a (vgl. Figur 2).

Im vorliegenden Ausführungsbeispiel weist die Induktionsgargerätevorrichtung 10a zwei Induktionsheizeinheiten 12a auf. Von den Induktionsheizeinheiten 12a ist in den Figuren lediglich eine dargestellt. Alternativ könnte die Induktionsgargerätevorrichtung 10a insbesondere eine andere Anzahl an Induktionsheizeinheiten 12a aufweisen. Beispielsweise könnte die Induktionsgargerätevorrichtung 10a genau eine einzige Induktionsheizeinheit 12a aufweisen. Alternativ könnte die Induktionsgargerätevorrichtung 10a beispielsweise zumindest drei, insbesondere zumindest vier, vorteilhaft zumindest fünf und vorzugsweise mehrere Induktionsheizeinheiten 12a aufweisen.

In einem Betriebszustand sind die Induktionsheizeinheiten 12a außerhalb des Garraums 46a angeordnet. Eine untere Induktionsheizeinheit 12a der Induktionsheizeinheiten 12a ist in einer Einbaulage unterhalb der als Muffelbodenwand 52a ausgebildeten Muffelwandung 50a angeordnet. Die untere Induktionsheizeinheit 12a ist an der als Muffelbodenwand 52a ausgebildeten Muffelwandung 50a angeordnet.

Eine obere Induktionsheizeinheit 12a der Induktionsheizeinheiten 12a ist in einer Einbaulage oberhalb der als Muffeldeckenwand 54a ausgebildeten Muffelwandung 50a angeordnet. Die obere Induktionsheizeinheit 12a ist an der als Muffeldeckenwand 54a ausgebildeten Muffelwandung 50a angeordnet.

Alternativ könnte zumindest eine Induktionsheizeinheit 12a der Induktionsheizeinheiten 12a an einer als Muffelseitenwand 58a, 60a ausgebildeten Muffelwandung 50a und/oder an einer als Muffelrückwand 56a ausgebildeten Muffelwandung 50a angeordnet sein. Im Folgenden wird lediglich eine der Induktionsheizeinheiten 12a beschrieben.

Pro Induktionsheizeinheit 12a weist die Induktionsgargerätevorrichtung 10a eine Muffelisolationseinheit 62a auf (vgl. Figur 2). Die Muffelisolationseinheit 62a ist zu einer, insbesondere elektrischen und/oder thermischen Isolation zwischen der Induktionsheizeinheit 12a und einer Muffelwandung 50a vorgesehen, an welcher insbesondere die Induktionsheizeinheit 12a angeordnet ist. In einem Betriebszustand isoliert die Muffelisolationseinheit 62a die Induktionsheizeinheit 12a und die Muffelwandung 50a, an welcher insbesondere die Induktionsheizeinheit 12a angeordnet ist, insbesondere elektrisch und/oder thermisch gegeneinander. In einem Betriebszustand ist die Muffelisolationseinheit 62a auf einer der Muffelwandung 50a zugewandten Seite der Induktionsheizeinheit 12a angeordnet.

Die Muffelisolationseinheit 62a besteht im vorliegenden Ausführungsbeispiel zu einem Großteil aus Glimmer, und zwar insbesondere aus Kunstglimmer. Alternativ oder zusätzlich könnte Muffelisolationseinheit 62a zu einem Großteil aus Mineralwolle, wie beispielsweise aus Basalt, insbesondere aus Basaltfasern, und/oder aus Spat und/oder aus Dolomit und/oder aus Diabas und/oder aus Anorthosit und/oder aus Recyclingmaterial bestehen.

Pro Induktionsheizeinheit 12a weist die Induktionsgargerätevorrichtung 10a eine Isolationseinheit 28a auf (vgl. Figur 2). In einem Betriebszustand ist die Isolationseinheit 28a auf einer der Muffelwandung 50a abgewandten Seite der Induktionsheizeinheit 12a angeordnet. Die Isolationseinheit 28a ist zu einer, insbesondere elektrischen und/oder thermischen Isolation der Induktionsheizeinheit 12a gegenüber einer Umgebung vorgesehen. In einem Betriebszustand isoliert die Isolationseinheit 28a die Induktionsheizeinheit 12a, insbesondere elektrisch und/oder thermisch, gegenüber einer Umgebung. Die Isolationseinheit 28a könnte beispielsweise zu einem Großteil aus Glaswolle und/oder aus Mineralwolle bestehen.

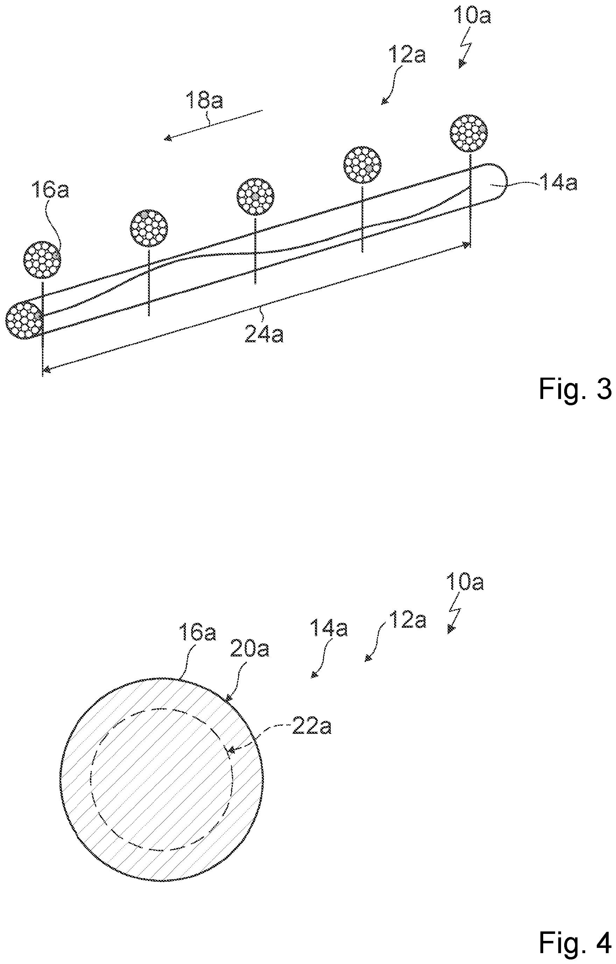

Im vorliegenden Ausführungsbeispiel weist die Induktionsheizeinheit 12a eine Induktionsheizleitung 14a auf (vgl. Figuren 3 und 4). Die Induktionsheizleitung 14a ist in einem Betriebszustand zu einer Spule gewickelt. In einem Betriebszustand stellt die Induktionsheizeinheit 12a mittels der Induktionsheizleitung 14a ein elektromagnetisches Wechselfeld bereit, und zwar insbesondere zu einer Erhitzung der Muffelwandung 50a, an welcher insbesondere die Induktionsheizeinheit 12a angeordnet ist.

In einem Betriebszustand ist die Induktionsheizeinheit 12a in einem Nahbereich der Muffelwandung 50a angeordnet. Die von der Induktionsheizeinheit 12a erhitzte Muffelwandung 50a kann in einem Betriebszustand eine Betriebstemperatur von bis zu 550 °C erreichen. Die Induktionsheizeinheit 12a weist eine maximale Betriebstemperatur von mindestens 550 °C auf. Die Induktionsheizleitung 14a der Induktionsheizeinheit 12a weist eine maximale Betriebstemperatur von mindestens 550 °C auf.

Die Induktionsheizleitung 14a weist eine Vielzahl an Induktionsheizleitungselementen 16a auf. Eine Anzahl an Induktionsheizleitungselementen 16a beträgt im vorliegenden Ausführungsbeispiel zwanzig. Die Induktionsheizleitung 14a weist eine Anzahl von zwanzig Induktionsheizleitungselementen 16a auf.

Die Induktionsheizleitungselemente 16a sind in Längsrichtung 18a der Induktionsheizleitung 14a azimutal und radial gewickelt. Die Induktionsheizleitungselemente 16a sind, insbesondere aufgrund der azimutalen und radialen Wicklung, elektrisch gleichwertig angeordnet.

In Figur 3 ist ein Längenabschnitt 24a der Induktionsheizleitung 14a dargestellt. Der Längenabschnitt 24a ist parallel zu einer Längsrichtung 18a der Induktionsheizleitung 14a ausgerichtet. Der Längenabschnitt 24a ist definiert durch eine erste Querschnittsebene, in welcher ein Induktionsheizleitungselement 16a eine bestimmte azimutale und/oder radiale Position einnimmt, und durch eine in Längsrichtung 18a auf die erste Querschnittsebene folgende und insbesondere der ersten Querschnittsebene nächstliegende zweite Querschnittsebene, in welcher das Induktionsheizleitungselement 16a die bestimmte azimutale und/oder radiale Position erneut einnimmt. Insbesondere erstreckt sich der Längenabschnitt 24a ausgehend von einer ersten Querschnittsebene, in welcher ein Induktionsheizleitungselement 16a eine bestimmte azimutale und/oder radiale Position einnimmt, und bis hin zu einer in Längsrichtung 18a auf die erste Querschnittsebene folgende und insbesondere der ersten Querschnittsebene nächstliegende zweite Querschnittsebene, in welcher das Induktionsheizleitungselement 16a die bestimmte azimutale und/oder radiale Position erneut einnimmt.

Ein Großteil der Induktionsheizleitungselemente 16a und vorteilhaft alle der Induktionsheizleitungselemente 16a bestehen abschnittsweise in einem jeweiligen Randbereich 20a zu einem Großteil aus einem Randmaterial (vgl. Figur 4). Das jeweilige Randmaterial weist zumindest ein Metall auf. Die Induktionsheizleitungselemente 16a sind im vorliegenden Ausführungsbeispiel alle identisch ausgebildet, weshalb im Folgenden lediglich eines der Induktionsheizleitungselemente 16a beschrieben wird.

Das Induktionsheizleitungselement 16a besteht über im Wesentlichen eine gesamte Längserstreckung der Induktionsheizleitung 14a in dem Randbereich 20a zu einem Großteil aus dem Randmaterial. Im vorliegenden Ausführungsbeispiel besteht das Induktionsheizleitungselement 16a über eine gesamte Längserstreckung der Induktionsheizleitung 14a in dem Randbereich 20a zu einem Großteil aus dem Randmaterial.

Im vorliegenden Ausführungsbeispiel weist das Randmaterial zu einem Großteil und vorteilhaft vollständig ein Metall auf. Das Randmaterial besteht zu einem Großteil und vorteilhaft vollständig aus dem Metall. Das Randmaterial ist frei von Nichtmetallen. Im vorliegenden Ausführungsbeispiel besteht das Randmaterial zu einem Großteil und vorteilhaft vollständig aus Aluminium.

Das Induktionsheizleitungselement 16a besteht über im Wesentlichen eine gesamte Längserstreckung der Induktionsheizleitung 14a in einem Kernbereich 22a zu einem Großteil aus einem Kernmaterial. Im vorliegenden Ausführungsbeispiel besteht das Induktionsheizleitungselement 16a über eine gesamte Längserstreckung der Induktionsheizleitung 14a in dem Kernbereich 22a zu einem Großteil aus dem Kernmaterial.

Im vorliegenden Ausführungsbeispiel weist das Kernmaterial zu einem Großteil und vorteilhaft vollständig ein Metall auf. Das Kernmaterial besteht zu einem Großteil und vorteilhaft vollständig aus dem Metall. Das Kernmaterial ist frei von Nichtmetallen. Im vorliegenden Ausführungsbeispiel besteht das Kernmaterial zu einem Großteil und vorteilhaft vollständig aus Aluminium.

Das Randmaterial und das Kernmaterial des Induktionsheizleitungselements 16a sind identisch. Das Induktionsheizleitungselement 16a besteht zu einem Großteil und vorteilhaft vollständig aus Aluminium.

Alternativ **könnte das Induktionsheizleitungselement 16a zu einem Großteil und** vor**teilhaft vollständig aus Kupfer bestehen. Das Kernmaterial könnte zu einem Großteil und vorteilhaft vollständig aus Aluminium bestehen. Das Randmaterial könnte zu einem Großteil und vorteilhaft vollständig aus Aluminium bestehen.**

In Figur 4 ist eine angenommene Grenze zwischen dem Randbereich 20a und dem Kernbereich 22a gestrichelt eingetragen. Da das Randmaterial und das Kernmaterial des Induktionsheizleitungselements 16a identisch sind, ist das Induktionsheizleitungselement 16a frei von einer derartigen Grenze.

In einem Verfahren zu einer Herstellung der Induktionsgargerätevorrichtung 10a werden die Induktionsheizleitungselemente 16a in Längsrichtung 18a der Induktionsheizleitung 14a azimutal und radial gewickelt. Die Induktionsheizleitungselemente 16a werden in dem Kernbereich 22a zu einem Großteil aus dem Kernmaterial ausgebildet, das insbesondere zu einem Großteil und vorteilhaft vollständig zumindest ein Metall aufweist und vorzugsweise aus zumindest einem Metall besteht.

Die Induktionsheizleitungselemente 16a werden in dem Randbereich 20a zu einem Großteil aus dem Randmaterial ausgebildet, das insbesondere zu einem Großteil und vorteilhaft vollständig zumindest ein Metall aufweist und vorzugsweise aus zumindest einem Metall besteht. Das Randmaterial und das Kernmaterial werden identisch gewählt, um insbesondere eine einfache und/oder kostengünstige Herstellung der Induktionsgargerätevorrichtung 10a zu ermöglichen.

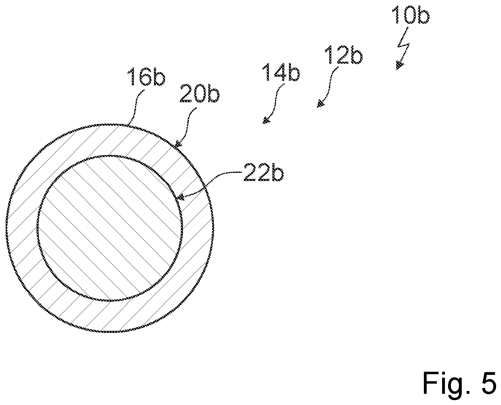

In Figur 5 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 4 verwiesen werden kann. Zur Unterscheidung der Ausführungsbeispiele ist der Buchstabe a in den Bezugszeichen des Ausführungsbeispiels in den Figuren 1 bis 4 durch den Buchstaben b in den Bezugszeichen des Ausführungsbeispiels der Figur 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 4 verwiesen werden.

Figur 5 zeigt einen Querschnitt eines Induktionsheizleitungselements 16b einer Induktionsheizleitung 14b einer Induktionsheizeinheit 12b einer alternativen Induktionsgargerätevorrichtung 10b. Das zu dem Ausführungsbeispiel der Figur 5 beschriebene Induktionsheizleitungselement 16b unterscheidet sich von dem zu dem Ausführungsbeispiel der Figuren 1 bis 4 beschriebenen Induktionsheizleitungselement 16a durch ein Randmaterial des Induktionsheizleitungselements 16b.

Ein Kernmaterial des Induktionsheizleitungselements 16b besteht zu einem Großteil und vorteilhaft vollständig aus einem Metall. Das Kernmaterial des Induktionsheizleitungselements 16b besteht zu einem Großteil und vorteilhaft vollständig aus Aluminium.

Das Randmaterial des Induktionsheizleitungselements 16b weist zu einem Großteil und vorteilhaft vollständig eine Metallverbindung auf. Das Randmaterial des Induktionsheizleitungselements 16b besteht zu einem Großteil und vorteilhaft vollständig aus einer Metallverbindung.

Das Metall, aus welchem das Kernmaterial des Induktionsheizleitungselements 16b zu einem Großteil und vorteilhaft vollständig besteht, ist Teil des eine Metallverbindung aufweisenden Randmaterials. Das die Metallverbindung aufweisende Randmaterial besteht im vorliegenden Ausführungsbeispiel zu einem Großteil und vorteilhaft vollständig aus Aluminiumoxid. Das die Metallverbindung aufweisende Randmaterial ist elektrisch isolierend.

In einem nicht dargestellten Ausführungsbeispiel könnte ein Kernmaterial eines Induktionsheizleitungselements einer Induktionsheizleitung einer Induktionsheizeinheit beispielsweise zu einem Großteil und vorteilhaft vollständig aus Kupfer bestehen. Ein Randmaterial des Induktionsheizleitungselements könnte beispielsweise aus einer Kupfer-Nickel-Verbindung und/oder aus einer Kupfer-Nickel-Legierung und/oder aus vernickeltem Kupfer bestehen.

### Bezugszeichen

- 10: Induktionsgargerätevorrichtung
- 12: Induktionsheizeinheit
- 14: Induktionsheizleitung
- 16: Induktionsheizleitungselement
- 18: Längsrichtung
- 20: Randbereich
- 22: Kernbereich
- 24: Längenabschnitt
- 28: Isolationseinheit
- 42: Induktionsgargerät
- 44: Muffel
- 46: Garraum
- 48: Gargerätetür
- 50: Muffelwandung
- 52: Muffelbodenwand
- 54: Muffeldeckenwand
- 56: Muffelrückwand
- 58: Muffelseitenwand
- 60: Muffelseitenwand
- 62: Muffelisolationseinheit
- 64: Bedienerschnittstelle
- 66: Steuereinheit

## Patentansprüche

1. Induktionsgargerätevorrichtung, insbesondere Induktionsofenvorrichtung, mit zumindest einer Induktionsheizeinheit (12a-b), welche zumindest eine Induktionsheizleitung (14a-b) mit einer Vielzahl an Induktionsheizleitungselementen (16a-b) aufweist, die in Längsrichtung (18a-b) der Induktionsheizleitung (14a-b) azimutal und radial gewickelt sind, **dadurch gekennzeichnet, dass** zumindest eines der Induktionsheizleitungselemente (16a-b) zumindest abschnittsweise in zumindest einem Randbereich (20a-b) des Induktionsheizleitungselements (16a-b) wenigstens zu einem Großteil aus zumindest einem Randmaterial besteht, das zumindest ein Metall aufweist, wobei eine Anzahl an Induktionsheizleitungselementen (16a-b) mindestens 15 beträgt.

2. Induktionsgargerätevorrichtung nach dem Oberbegriff des Anspruchs 1 und insbesondere nach Anspruch 1, **dadurch gekennzeichnet, dass** die Induktionsheizeinheit (12a-b) eine maximale Betriebstemperatur von mindestens 250 °C aufweist.

3. Induktionsgargerätevorrichtung nach Anspruch 1 oder 2, **dadurch gekennzeichnet, dass** wenigstens ein Großteil der Induktionsheizleitungselemente (16a-b) zumindest abschnittsweise in zumindest einem jeweiligen Randbereich (20a-b) wenigstens zu einem Großteil aus dem Randmaterial bestehen.

4. Induktionsgargerätevorrichtung nach einem der vorhergehenden Ansprüche, **dadurch gekennzeichnet, dass** das Induktionsheizleitungselement (16a-b) über wenigstens im Wesentlichen eine gesamte Längserstreckung der Induktionsheizleitung (14a-b) in dem Randbereich (20a-b) wenigstens zu einem Großteil aus dem Randmaterial besteht.

5. Induktionsgargerätevorrichtung nach einem der vorhergehenden Ansprüche, **dadurch gekennzeichnet, dass** das Randmaterial wenigstens zu einem Großteil zumindest ein Metall aufweist.

6. Induktionsgargerätevorrichtung nach Anspruch 5, **dadurch gekennzeichnet, dass** das Randmaterial und ein Kernmaterial des Induktionsheizleitungselements (16a) identisch sind.

7. Induktionsgargerätevorrichtung nach einem der Ansprüche 1 bis 4, **dadurch gekennzeichnet, dass** das Randmaterial wenigstens zu einem Großteil zumindest eine Metallverbindung aufweist.

8. Induktionsgargerätevorrichtung nach Anspruch 7, **dadurch gekennzeichnet, dass** das Induktionsheizleitungselement (16b) zumindest ein Kernmaterial aufweist, welches wenigstens zu einem Großteil aus zumindest einem Metall besteht, das Teil des eine Metallverbindung aufweisenden Randmaterials ist.

9. Induktionsgargerätevorrichtung nach Anspruch 7 oder 8, **dadurch gekennzeichnet, dass** das die Metallverbindung aufweisende Randmaterial elektrisch isolierend ist.

10. Induktionsgargerätevorrichtung nach einem der vorhergehenden Ansprüche, **dadurch gekennzeichnet, dass** ein Kernmaterial des Induktionsheizleitungselements (16a-b) wenigstens zu einem Großteil aus Aluminium besteht.

11. Induktionsgargerät, insbesondere Induktionsofen, mit zumindest einer Induktionsgargerätevorrichtung (10a-b) nach einem der vorhergehenden Ansprüche.

## Claims

1. Induction cooking appliance apparatus, in particular an induction oven apparatus, having at least one induction heating unit (12a-b) which has at least one induction heating line (14a-b) having a multiplicity of induction heating line elements (16a-b) which are wound in the longitudinal direction (18a-b) of the induction heating line (14a-b) in an azimuthal and radial manner, **characterised in that** at least one of the induction heating line elements (16a-b) consists at least in sections in at least one edge region (20a-b) of the induction heating line element (16a-b) at least to a large extent of at least one edge material which has at least one metal, wherein a number of induction heating line elements (16a-b) amounts to at least 15.

2. Induction cooking appliance apparatus according to the precharacterising clause of claim 1 and in particular according to claim 1, **characterised in that** the induction heating unit (12a-b) has a maximum operating temperature of at least 250°C.

3. Induction cooking appliance apparatus according to claim 1 or 2, **characterised in that** at least a majority of the induction heating line elements (16a-b) consist at least in sections in at least one respective edge region (20a-b) at least to a large extent of the edge material.

4. Induction cooking appliance apparatus according to one of the preceding claims, **characterised in that** the induction heating line element (16a-b) consists over at least essentially an entire longitudinal extension of the induction heating line (14a-b) in the edge region (20a-b) at least to a large extent of the edge material.

5. Induction cooking appliance apparatus according to one of the preceding claims, **characterised in that** the edge material has at least to a large extent at least one metal.

6. Induction cooking appliance apparatus according to claim 5, **characterised in that** the edge material and a core material of the induction heating line element (16a) are identical.

7. Induction cooking appliance apparatus according to one of claims 1 to 4, **characterised in that** the edge material has at least to a large extent at least one metal compound.

8. Induction cooking appliance apparatus according to claim 7, **characterised in that** the induction heating line element (16b) has at least one core material which consists at least to a large extent of at least one metal which is part of the edge material which has a metal compound.

9. Induction cooking appliance apparatus according to claim 7 or 8, **characterised in that** the edge material which has the metal compound is electrically insulating.

10. Induction cooking appliance apparatus according to one of the preceding claims, **characterised in that** a core material of the induction heating line element (16a-b) consists at least to a large extent of aluminium.

11. Induction cooking appliance, in particular an induction oven, having at least one induction cooking appliance apparatus (10a-b) according to one of the preceding claims.

## Revendications

1. Dispositif d'appareil de cuisson à induction, en particulier dispositif de four à induction, avec au moins une unité de chauffe à induction (12a-b), laquelle présente au moins un câble chauffant à induction (14a-b) avec une pluralité d'éléments de câble chauffant à induction (16a-b) embobinés en azimut et radialement dans le sens longitudinal (18a-b) du câble chauffant à induction (14a-b), **caractérisé en ce qu'**au moins un des éléments de câble chauffant à induction (16a-b) se compose au moins par sections dans au moins une zone périphérique (20a-b) de l'élément de câble chauffant à induction (16a-b) au moins en majeure partie d'au moins un matériau périphérique qui présente au moins un métal, le nombre des éléments de câble chauffant à induction (16a-b) atteignant au moins 15.

2. Dispositif d'appareil de cuisson à induction selon le préambulaire de la revendication 1 et en particulier selon la revendication 1, **caractérisé en ce que** l'unité de chauffe à induction (12a-b) présente une température de fonctionnement maximale d'au moins 250 °C.

3. Dispositif d'appareil de cuisson à induction selon la revendication 1 ou 2, **caractérisé en ce qu'**au moins une majeure partie des éléments de câble chauffant à induction (16a-b) se compose au moins par sections dans au moins une zone périphérique respective (20a-b) au moins en majeure partie du matériau périphérique.

4. Dispositif d'appareil de cuisson à induction selon l'une des revendications précédentes, **caractérisé en ce que** l'élément de câble chauffant à induction (16a-b) se compose sur au moins essentiellement une étendue longitudinale complète du câble chauffant à induction (14a-b) dans la zone périphérique (20a-b) au moins en majeure partie du matériau périphérique.

5. Dispositif d'appareil de cuisson à induction selon l'une des revendications précédentes, **caractérisé en ce que** le matériau périphérique présente au moins en majeure partie au moins un métal.

6. Dispositif d'appareil de cuisson à induction selon la revendication 5, **caractérisé en ce que** le matériau périphérique et un matériau de coeur de l'élément de câble chauffant à induction (16a) sont identiques.

7. Dispositif d'appareil de cuisson à induction selon l'une des revendications 1 à 4, **caractérisé en ce que** le matériau périphérique présente au moins en majeure partie au moins un composé métallique.

8. Dispositif d'appareil de cuisson à induction selon la revendication 7, **caractérisé en ce que** l'élément de câble chauffant à induction (16b) présente au moins un matériau de coeur, lequel se compose au moins en majeure partie d'au moins un métal faisant partie du matériau périphérique présentant un composé métallique.

9. Dispositif d'appareil de cuisson à induction selon la revendication 7 ou 8, **caractérisé en ce que** le matériau périphérique présentant le composé métallique est électriquement isolant.

10. Dispositif d'appareil de cuisson à induction selon l'une des revendications précédentes, **caractérisé en ce qu'**un matériau de coeur de l'élément de câble chauffant à induction (16a-b) se compose au moins en majeure partie d'aluminium.

11. Appareil de cuisson à induction, en particulier four à induction, avec au moins un dispositif d'appareil de cuisson à induction (10a-b) selon l'une des revendications précédentes.
